# EUROPEAN PATENT APPLICATION

(11) **EP 0 811 638 A2**
(43) Date of publication of application: **10.12.1997**
(21) Application number: 97303811.0
(22) Date of filing: 04.06.1997
(51) Int. Cl.: C08F 2/44, C08F 2/34, C08F 10/02, C08F 4/642

(54) **Process for controlling static in polymerizations utilizing metallocene catalysts**

(30) Priority: 06.06.1996 US 659441
(71) Applicant: UNION CARBIDE CHEMICALS & PLASTICS TECHNOLOGY CORPORATION, Danbury, Connecticut 06817-001 (US)
(72) Inventor: Kiu, Hee Lee, SO. Charleston, West Virginia 25303 (US); Hussein, Fathi David, Cross Lanes, West Virginia 25313 (US); Williams, Cark Curtis, Charleston, West Virginia 25314 (US)
(74) Representative: Allard, Susan Joyce

(57) **Abstract**

The invention provides a process for producing a polyethylene homopolymer, copolymer, or terpolymer comprising introducing ethylene and optionally at least one alpha olefin having 3 to 18 carbon atoms in a reaction zone containing a metallocene polymerization catalyst under polymerization conditions in the presence of an amine-containing antistatic agent.

## Description

### Field of the Invention

The present invention relates to a process for producing alpha olefin polymers using a metallocene catalyst, and more particularly to a process for producing alpha olefin polymers using unsupported metallocene catalysts in a gas phase reactor without experiencing static build-up in the reactor.

### Background of the Invention

Electrostatic activity in commercial fluid bed polymerization reactors has traditionally been linked to sheet formation and fouling at the reactor walls. The sheeting results from accumulation of an insulating stagnant layer of resin fines on the reactor walls which can be monitored by detecting electrostatic activity directly or indirectly by detecting temperature changes at the reactor walls.

While all polymerizations using transition metal catalysts exhibit some electrosatic activity, such activity has been found to be particularly acute using a metallocene catalyst, and when using a liquid metallocene catalyst in particular. Metallocenes exhibit extremely erratic static flucuations due to a number of different factors.

For example, some of the special features of electrostatic activity using metallocene catalyst can be summarized as follows. Supported metallocene catalysts can contain alumoxane, in addition to the catalytic compound, on the support. Metallocene catalysts can also be fed to the reactor in solutions as described in US patent No. 5,317,036. The alumoxane co-catalyst tends to contain unhydrolyzed trimethyl aluminum which is known to those skilled in the art to contribute to reactor static when impurities are present in the reactor. The use of supported alumoxanes, or solution alumoxanes, which optionally contain trimethyl aluminum, can result in more erratic electrostatic behavior than conventional aluminum alkyl co-catalysts such as triethyl aluminum. Metallocene compounds are known to exhibit long polymerization life times and have a tendency to increase polymerization rate as reactor temperature is increased. Also, the uniform incorporation of comonomers in the polymer tends to decrease the melting or agglomeration temperature relative to traditional materials of similar density and molecular weight. As a result of these characteristics, metallocene catalysts can exhibit a higher propensity for sheeting than convention catalysts in a gas phase process.

Static for other types of catalysts is often severe during the initial reactor start-up, followed by long periods of stable operation. However, with metallocene catalysts, the static pattern is less predictable. Sudden erratic static behavior can appear after long periods of stable behavior. The static can change rapidly between positive and negative polarity during reactor operation. Furthermore, static treatment for metallocene catalysts can vary among different metallocene catalysts.

Accordingly, there is a need to control or neutralize the static or reduce its intensity during gas phase, fluidized bed polymerizations using metallocene catalysts which need is answered by the present invention.

### SUMMARY OF THE INVENTION

The present invention provides a process for making a polyethylene homopolymer, copolymer, or terpolymer comprising providing ethylene and optionally at least one alpha olefin having 3 to 18 carbon atoms in a reaction zone containing a metallocene polymerization catalyst under polymerization conditions in the presence of an antistatic agent represented by the formula: 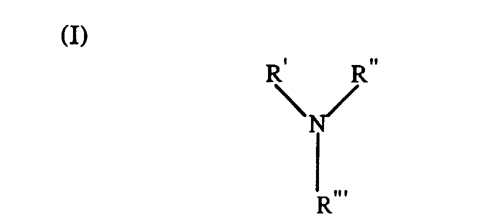 wherein R' is an alkyl having 2 to 22 carbon atoms; R'' is a hydroxyalkyl having 2 to 22 carbon atoms; and R''' is selected from the group consisting of R' and R''.

### DETAILED DESCRIPTION OF THE INVENTION

### Polymerization Conditions.

Polymerizations described herein may be conducted in the gas phase in a stirred or fluidized bed reactor, or in a slurry phase reactor using equipment and procedures well known in the art. Preferably the polymerization is conducted in the gas phase as disclosed in U.S. Patent No. 4,588,790; 4,988,783; 4,994,534; 5,317,036; 5,453,471 and 5,462,999. Most preferably, the polymerization of the invention is conducted in a condensing mode as disclosed in U.S. Patent Nos. 4,528,790 and/or 5,462,999. Ethylene, higher alpha-olefin(s), and, optionally other monomers, are contacted with an effective amount of the metallocene catalyst at a temperature and a pressure sufficient to initiate polymerization. The process may be carried out in a single reactor or in two or more multiple reactors in series (or staged). It is preferred to use a single reactor. The process is conducted substantially in the absence of catalyst poisons such as moisture, oxygen, carbon dioxide, and acetylene, since only minor amounts (i.e. ≤2 ppm) of such materials have been found to affect the polymerization adversely. The polymerization of the present invention can be additionally conducted in the presence of inert particulate material such as carbon black and at least one diene such as ethylidene norbornene (ENB) as described in U.S. Patent Nos. 4,994,534; 5,304,588; and 5,317,036.

When hydrogen is used as a chain transfer agent in the process, it is used in amounts varying between about 0.0001 to about 10 moles of hydrogen per mole of total monomer feed. Also, as desired for temperature control of the system, any gas (e.g., nitrogen) inert to the catalyst composition and reactants can also be present in the gas stream.

Organometallic compounds may be employed as scavenging agents for poisons to increase the catalyst activity. Examples of these compounds are metal alkyls, preferably aluminum alkyls, most preferably triethylaluminum. Use of such scavenging agents is well known in the art.

### Polymers Produced.

Polyolefins that can be produced in accordance with the present invention are homopolymers, copolymers, and terpolymers of ethylene. Preferred higher alpha-olefins employed in copolymers and terpolymers contain 3 to about 12 carbon atoms such as propylene, 1-butene, 1-pentene, 1-hexene, 4-methyl-1-pentene, and 1-octene, with densities ranging from about 0.86 to about 0.96 g/cc, preferably from about 0.89 to about 0.94 g/cc. Of these, ethylene-hexene-1, ethylene--butene-1, and ethylene-propylene are most preferred. Optionally the ethylene-propylene composition can additionally contain at least one diene such as ENB and inert particulate material such as carbon black, silica, talc, clay, and mixtures thereof. Preferred dienes for use in this invention include dienes selected from the group consisting of 5-ethylidene-2-norbornene, 1,3-cyclopentadiene, 1,7-octadiene, 1,4-hexadiene, and mixtures thereof.

The polymers so produced can be stabilized post reaction using conventionally available stabilizers such as Irganox® 1035. Molecular weight of the polymers can be controlled by the use of a chain transfer agent such as hydrogen. These polymers have utility in films which are clear, transparent, and essentially gel-free and molded plastic products among other uses. Polymers containing inert particulate materials in accordance with 4,994,534 and 5,304,588 find utility in roofing, hosing, and tire components such as sidewalls.

### Catalyst Composition.

The catalyst composition comprises a metallocene catalyst and an activating cocatalyst. The practice of this invention is not limited to any particular class or kind of metallocene catalyst. Accordingly, the catalyst composition may comprise any metallocene catalyst useful in slurry, solution, bulk, or gas phase olefin polymerization. One or more than one metallocene catalyst may be employed. For example, as described in U.S. Patent No. 4,530,914, at least two metallocene catalysts may be used in a single catalyst composition to achieve a broadened molecular weight distribution polymer product.

Metallocene catalysts are organometallic coordination complexes of one or more π-bonded moieties in association with a metal atom from Groups IIIB to VIII or the rare earth metals of the Periodic Table.

Bridged and unbridged mono-, bis-, and tris-cycloalkadienyl/metal compounds are the most common metallocene catalysts, and generally are of the formula:

(L)_{y}R¹ _{z}(L')MX_{(x-y-1)} (II)

wherein M is a metal from groups IIIB to VIII of the Periodic Table; L and L' are the same or different and are π-bonded ligands coordinated to M, preferably cycloalkadienyl groups such as cyclopentadienyl, indenyl, or fluorenyl groups optionally substituted with one or more hydrocarbyl groups containing 1 to 20 carbon atoms; R¹ is a C₁-C₄ substituted or unsubstituted alkylene radical, a dialkyl or diaryl germanium or silicon, or an alkyl or aryl phosphine or amine radical bridging L and L'; each X is independently hydrogen, an aryl, alkyl, alkenyl, alkylaryl, or arylalkyl radical having 1-20 carbon atoms, a hydrocarboxy radical having 1-20 carbon atoms, a halogen, R²CO₂-, or R²₂NCO₂-, wherein each R² is a hydrocarbyl group containing 1 to about 20 carbon atoms; n and m are each 0, 1, 2, 3, or 4; y is 0, 1, or 2; x is 1, 2, 3, or 4 depending upon the valence state of M; z is 0 or 1 and is 0 when y is 0; and x-y ≥ 1.

Illustrative but non-limiting examples of metallocene catalysts represented by formula II are dialkyl metallocenes such as bis(cyclopentadienyl)titanium dimethyl, bis(cyclopentadienyl)titanium diphenyl, bis(cyclopentadienyl)zirconium dimethyl, bis(cyclopentadienyl)zirconium diphenyl, bis(cyclopentadienyl)hafnium methyl and diphenyl, bis(cyclopentadienyl)titanium di-neopentyl, bis(cyclopentadienyl)zirconium di-neopentyl, bis(cyclopentadienyl)titanium dibenzyl, bis(cyclopentadienyl)zirconium dibenzyl, bis(cyclopentadienyl)vanadium dimethyl; mono alkyl metallocenes such as bis(cyclopentadienyl)titanium methyl chloride, bis(cyclopentadienyl)titanium ethyl chloride, bis(cyclopentadienyl)titanium phenyl chloride, bis(cyclopentadienyl)zirconium methyl chloride, bis(cyclopentadienyl)zirconium ethyl chloride, bis(cyclopentadienyl)zirconium phenyl chloride, bis(cyclopentadienyl)titanium methyl bromide; trialkyl metallocenes such as cyclopentadienyl titanium trimethyl, cyclopentadienyl zirconium triphenyl, cyclopentadienyl zirconium trineopentyl, cyclopentadienyl zirconium trimethyl, cyclopentadienyl hafnium triphenyl, cyclopentadienyl hafnium trineopentyl, and cyclopentadienyl hafnium trimethyl; monocyclopentadienyl titanocenes such as pentamethylcyclopentadienyl titanium trichloride, pentaethylcyclopentadienyl titanium trichloride; bis(pentamethylcyclopentadienyl) titanium diphenyl, the carbene represented by the formula bis(cyclopentadienyl)titanium=CH₂ and derivatives of this reagent; substituted bis(cyclopentadienyl)titanium (IV) compounds such as bis(indenyl)titanium diphenyl or dichloride, bis(methylcyclopentadienyl)titanium diphenyl or dihalide; dialkyl, trialkyl, tetra-alkyl and penta-alkyl cyclopentadienyl titanium compounds such as bis(1,2-dimethylcyclopentadienyl)titanium diphenyl or dichloride, bis(1,2-diethylcyclopentadienyl)titanium diphenyl or dichloride; silicon, phosphine, amine or carbon bridged cyclopentadiene complexes, such as dimethyl silyldicyclopentadienyl titanium diphenyl or dichloride, methyl phosphine dicyclopentadienyl titanium diphenyl or dichloride, methylenedicyclopentadienyl titanium diphenyl or dichloride and other dihalide complexes, and the like; as well as bridged metallocene compounds such as isopropyl(cyclopentadienyl)(fluorenyl)zirconium dichloride, isopropyl(cyclopentadienyl)(octahydrofluorenyl)zirconium dichloride, diphenylmethylene(cyclopentadienyl)(fluorenyl)zirconium dichloride, diisopropylmethylene (cyclopentadienyl)(fluorenyl)-zirconium dichloride, diisobutylmethylene(cyclopentadienyl)(fluorenyl) zirconium dichloride, ditertbutylmethylene (cyclopentadienyl)(fluorenyl)zirconium dichloride, cyclohexylidene(cyclopentadienyl)(fluorenyl)zirconium dichloride, diisopropylmethylene (2,5-dimethylcyclopentadienyl)(fluorenyl)zirconium dichloride, isopropyl(cyclopentadienyl)(fluorenyl)hafnium dichloride, diphenylmethylene (cyclopentadienyl)(fluorenyl)hafnium dichloride, diisopropylmethylene(cyclopentadienyl)(fluorenyl)hafnium dichloride, diisobutylmethylene(cyclopentadienyl)(fluorenyl)hafnium dichloride, ditertbutylmethylene(cyclopentadienyl)(fluorenyl)hafnium dichloride, cyclohexylidene(cyclopentadienyl)(fluorenyl)hafnium dichloride, diisopropylmethylene(2,5-dimethylcyclopentadienyl)(fluorenyl)hafnium dichloride, isopropyl(cyclopentadienyl)(fluorenyl)titanium dichloride, diphenylmethylene(cyclopentadienyl)(fluorenyl)titanium dichloride, diisopropylmethylene(cyclopentadienyl) (fluorenyl)titanium dichloride, diisobutylmethylene(cyclopentadienyl)(fluorenyl)titanium dichloride, ditertbutylmethylene(cyclopentadienyl )(fluorenyl)titanium dichloride, cyclohexylidene(cyclopentadienyl)(fluorenyl)titanium dichloride, diisopropylmethylene(2,5 dimethylcyclopentadienyl fluorenyl)titanium dichloride, racemic-ethylene bis (1-indenyl) zirconium (IV) dichloride, racemic-ethylene bis (4,5,6,7-tetrahydro-1-indenyl) zirconium (IV) dichloride, racemic-dimethylsilyl bis (1-indenyl) zirconium (IV) dichloride, racemic-dimethylsilyl bis (4,5,6,7-tetrahydro-1-indenyl) zirconium (IV) dichloride, racemic-1,1,2,2-tetramethylsilanylene bis (1-indenyl) zirconium (IV) dichloride, racemic-1,1,2,2-tetramethylsilanylene bis (4,5,6,7-tetrahydro-1-indenyl) zirconium (IV), dichloride, ethylidene (1-indenyl tetramethylcyclopentadienyl) zirconium (IV) dichloride, racemic-dimethylsilyl bis (2-methyl-4-t-butyl-1-cyclopentadienyl) zirconium (IV) dichloride, racemic-ethylene bis (1-indenyl) hafnium (IV) dichloride, racemic-ethylene bis (4,5,6,7-tetrahydro-1-indenyl) hafnium (IV) dichloride, racemic-dimethylsilyl bis (1-indenyl) hafnium (IV) dichloride, racemic-dimethylsilyl bis (4,5,6,7-tetrahydro-1-indenyl) hafnium (IV) dichloride, racemic-1,1,2,2- tetramethylsilanylene bis (1-indenyl) hafnium (IV) dichloride, racemic-1,1,2,2-tetramethylsilanylene bis (4,5,6,7-tetrahydro-1-indenyl) hafnium (IV), dichloride, ethylidene (1-indenyl-2,3,4,5-tetramethyl-1-cyclopentadienyl) hafnium (IV) dichloride, racemic- ethylene bis (1-indenyl) titanium (IV) dichloride, racemic-ethylene bis (4,5,6,7-tetrahydro-1-indenyl) titanium (IV) dichloride, racemic-dimethylsilyl bis (1-indenyl) titanium (IV) dichloride, racemic-dimethylsilyl bis (4,5,6,7-tetrahydro-1-indenyl) titanium (IV) dichloride, racemic-1,1,2,2-tetramethylsilanylene bis (1-indenyl) titanium (IV) dichloride racemic-1,1,2,2-tetramethylsilanylene bis (4,5,6,7-tetrahydro-1-indenyl) titanium (IV) dichloride, and ethylidene (1-indenyl-2,3,4,5-tetramethyl-1-cyclopentadienyl) titanium IV) dichloride.

Particularly preferred metallocene catalysts have one of the following formulas (III or IV): 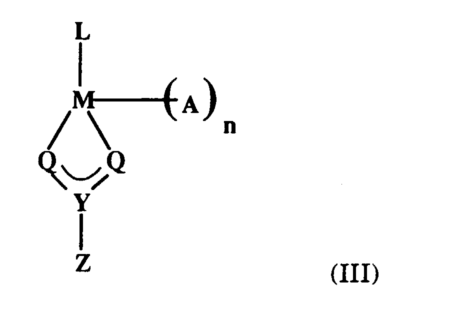 or 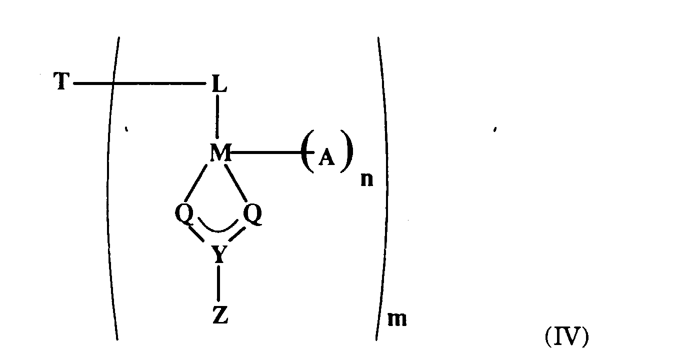 wherein:
M is a metal from groups IIIB to VIII of the Periodic Table, preferably Zr or Hf;
L is a substituted or unsubstituted, π-bonded ligand coordinated to M, preferably a substituted cycloalkadienyl ligand;
each Q is independently selected from the group consisting of -O-, -NR³-, -CR³₂- and -S-, preferably oxygen;
Y is either C or S, preferably carbon;
Z is selected from the group consisting of -OR³, -NR³₂, -CR³₃, -SR³, -SiR³₃, -PR³₂, and -H, with the proviso that when Q is -NR³-then Z is selected from the group consisting of -OR³, -NR³₂, -SR³, -SiR³₃, -PR³₂, and -H, preferably Z is selected from the group consisting of -OR³, -CR³₃, and -NR³₂;
n is 1 or 2;
A is a univalent anionic group when n is 2 or A is a divalent anionic group when n is 1, preferably A is a carbamate, carboxylate or other heteroallyl moiety described by the Q, Y and Z combination; and
each R³ is independently a group containing carbon, silicon, nitrogen, oxygen, and/or phosphorus and one or more R³ groups may be attached to the L substituent, preferably R³ is a hydrocarbon group containing from 1 to 20 carbon atoms, most preferably an alkyl, cycloalkyl or an aryl group;
T is a bridging group selected from the group consisting of alkylene or arylene groups containing from 1 to 10 carbon atoms optionally substituted with carbon or heteroatoms, germanium, silicone and alkyl phosphine; and
m is 1 to 7, preferably 2 to 6, most preferably 2 or 3.

The supportive substituent formed by Q, Y and Z is a unicharged polydentate ligand exerting electronic effects due to its high polarizability, similar to the cyclopentadienyl group. In the most preferred embodiments of this invention, the disubstituted carbamates, 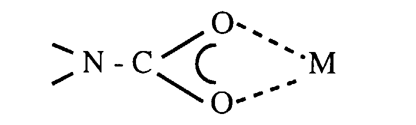 and the carboxylates 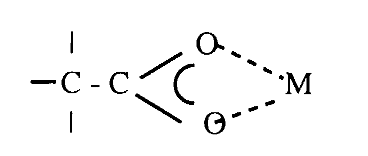 are employed.

Examples of metallocene catalysts according to formulas III and IV include indenyl zirconium tris(diethylcarbamate), indenyl zirconium tris(pivalate), indenyl zirconium tris(p-toluate), indenyl zirconium tris(benzoate), (1-methylindenyl) zirconium tris(pivalate), (2-methylindenyl) zirconium tris(diethylcarbamate), (methylcyclopentadienyl) zirconium tris(pivalate), cyclopentadienyl tris(pivalate), and (pentamethylcyclopentadienyl) zirconium tris(benzoate). Preferred examples of these metallocene catalysts are indenyl zirconium tris(diethylcarbamate) and indenyl zirconium tris(pivalate).

Another type of metallocene catalyst that can be used in accordance with the invention is a constrained geometry catalyst of the formula: 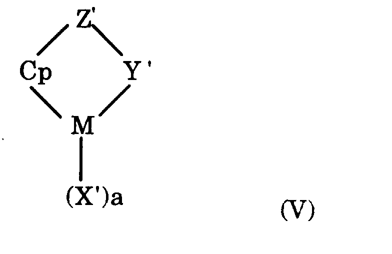 wherein:
M is a metal of Group IIIB to VIII of the Periodic Table;
Cp is a cyclopentadienyl or substituted cyclopentadienyl group bound in an η⁵ bonded mode to M;
Z' is a moiety comprising boron or a member of Group IVB of the Periodic Table of the Elements and optionally sulfur or oxygen, the moiety having up to 20 non-hydrogen atoms, and optionally Cp and Z' together form a fused ring system;
X' is an anionic ligand group or a neutral Lewis base ligand group having up to 30 non-hydrogen atoms;
a is 0, 1, 2, 3 or 4 depending on the valance of M; and
Y' is an anionic or non-anionic ligand group bonded to Z' and M comprising nitrogen, phosphorus, oxygen or sulfur and having up to 20 non-hydrogen atoms, and optionally Y' and Z' together form a fused ring system.

Constrained geometry catalysts are well known to those skilled in the art and are disclosed in, for example, U.S. Patent Nos. 5,026,798 and 5,055,438 and published European Application No. 0 416 815 A2.

Illustrative but non-limiting examples of substituents Z', Cp, Y', X' and M in formula V are:

| Z' | Cp | Y' | X' | M |
|---|---|---|---|---|
| dimethylsilyl | cyclopentadienyl | t-butylamido | chloride | titanium |
| methylphenylsilyl | fluorenyl | phenylamido | methyl | zirconium |
| diphenylsilyl | indenyl | cyclohexylamido | | hafnium |
| tetramethylethylene | | oxo | | |
| ethylene | tetramethylcyclopentadienyl | | | |
| diphenylmethylene | | | | |

The activating cocatalyst is capable of activating the metallocene catalyst. Preferably, the activating cocatalyst is one of the following: (a) branched or cyclic oligomeric poly(hydrocarbyl-aluminum oxide)s which contain repeating units of the general formula -(Al(R*)O)-, where R* is hydrogen, an alkyl radical containing from 1 to about 12 carbon atoms, or an aryl radical such as a substituted or unsubstituted phenyl or naphthyl group; (b) ionic salts of the general formula [A+][BR**4-], where A⁺ is a cationic Lewis or Bronsted acid capable of abstracting an alkyl, halogen, or hydrogen from the metallocene catalysts, B is boron, and R** is a substituted aromatic hydrocarbon, preferably a perfluorophenyl radical; and (c) boron alkyls of the general formula BR**3, where R** is as defined above.

Preferably, the activating cocatalyst is an aluminoxane such as methylaluminoxane (MAO) or modified methylaluminoxane (MMAO), or a boron alkyl. Aluminoxanes are preferred and their method of preparation is well known in the art. Aluminoxanes may be in the form of oligomeric linear alkyl aluminoxanes represented by the formula: 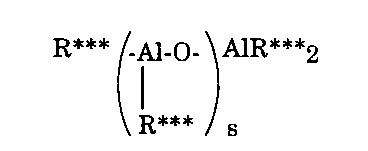 or oligomeric cyclic alkyl aluminoxanes of the formula: 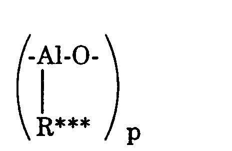 wherein s is 1-40, preferably 10-20; p is 3-40, preferably 3-20; and R*** is an alkyl group containing 1 to 12 carbon atoms, preferably methyl or an aryl radical such as a substituted or unsubstituted phenyl or naphthyl radical. In the case of MAO, R*** is methyl, whereas in MMAO, R*** is a mixture of methyl and C₂ to C₁₂ alkyl groups wherein methyl comprises about 20 to 80 percent by weight of the R*** group.

The amount of activating cocatalyst and metallocene catalyst usefully employed in preparation of the catalyst composition, whether the catalyst composition is formed in situ as it is being introduced into the reaction zone or formed prior to introduction into the reaction zone, can vary over a wide range. When the cocatalyst is a branched or cyclic oligomeric poly(hydrocarbylaluminum oxide), the mole ratio of aluminum atoms contained in the poly(hydrocarbylaluminum oxide) to metal atoms contained in the metallocene catalyst is generally in the range of from about 2:1 to about 100,000:1, preferably in the range of from about 10:1 to about 10,000:1, and most preferably in the range of from about 50:1 to about 2,000:1. When the cocatalyst is an ionic salt of the formula [A+][BR*₄-] or a boron alkyl of the formula BR*3, the mole ratio of boron atoms contained in the ionic salt or the boron alkyl to metal atoms contained in the metallocene catalyst is generally in the range of from about 0.5:1 to about 10:1, preferably in the range of from about 1:1 to about 5:1.

The metallocene catalyst, activating cocatalyst, or entire catalyst composition can be introduced to the reaction zone on a solid support, in soluble form as a liquid such as a solution or dispersion, sprayed dried, in the form of a prepolymer, or formed in-situ in the reaction zone. Particularly preferred among these is a catalyst composition that is spray dried or in soluble form as described in U.S. Patent No. 5,317,036 and European Patent Application No. 0 668 295 A1. In the case of a supported catalyst composition, typical supports include, for example, silica, carbon black, polyethylene, polycarbonate porous crosslinked polystyrene, porous crosslinked polypropylene, alumina, thoria, zirconia, and magnesium halide (e.g., magnesium dichloride) as well as other well known support materials and mixtures thereof. When supported, the metallocene catalyst and/or the activating cocatalyst are impregnated in or deposited on the surface of the inert support substrate, such that the impregnated material is between 1 and 90 percent by weight of the total weight of the impregnated material and the support.

In another embodiment of the present invention, ethylene polymer is produced utilizing the catalytically active reaction product of one or more metallocene catalysts with aluminoxane. The reaction product of the metallocene catalyst and aluminoxane, which are generally solid materials when produced in aliphatic solvents and solutions when produced in aromatic solvents, can be recovered by any well known technique. For example, the solid material can be recovered from the liquid by vacuum filtration or decantation. The oils can be recovered by decantation, and when dried, become glassy solids. The recovered material is thereafter dried under a stream of pure dry nitrogen, dried under vacuum, or by any other convenient manner. The recovered solid is the catalyst composition.

The catalyst composition may optionally contain one or more non-metallocene catalysts. These non-metallocene catalysts include for example any Ziegler-Natta catalysts containing a metal from groups IV(B), V(B), or VI(B) of the Periodic Table. Suitable activators for Ziegler-Natta catalysts are well known in the art and may also be included in the catalyst composition.

### Antistatic Agent.

The antistatic agent which can be added to the polymerization reaction system is represented by the formula: 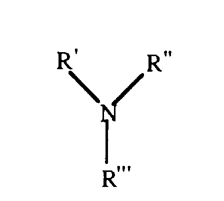 wherein R' is an alkyl having 2 to 22 carbon atoms; R'' is a hydroxylalkyl having 2 to 22 carbon atoms; R''' is selected from the group consisting of R' and R".

Examples of suitable antistatic agents include N,N-bis-(2-hydroxyethyl) alkylamine, N-(2-hydroxyethyl)dialkylamine, N,N-bis-(2-hydroxypropyl) alkylamine, N,N-bis-(2-hydroxybutyl) alkylamine and like compounds. The agent is preferably dissolved in a suitable solvent such as hexane, isopentane, or mixtures thereof.

The solvent can be present in the antistatic composition in amounts of about 50% to about 98% by weight, based on the weight of the compound.

A particularly suitable composition containing the compound is available commercially under the tradename ATMER® 163 which is available from ICI Americas, Inc., Wilmington, Delaware. This composition includes at least 97% by weight of N,N-bis-(2-hydroxyethyl) alkylamine and has a specific gravity of .91, a pH value of 9.8 (10%) in water, and a flash point of about 126°C.

The amount of antistat agent utilized generally depends on the type of polymer produced, the catalyst employed, and the type of optional materials, if any, employed. In general, the antistat agent is employed in amounts of about 0.0001% to 0.02% based on the weight of the polymer (resin), preferably from about 0.0001% to 0.01%, most preferably about 0.0001% to 0.001% based on the weight of the resin. That is, generally the anitstatic agent is employed in amounts ranging from about lppm to 200 ppm, preferably about lppm to 100 ppm, and most preferably about lppm to about 10 ppm.

The agent can be added to the reaction system in a variety of ways. Thus, the agent can be introduced into the reactor with all or a portion of one of the monomers or the cycle gas. In addition, the agent can be dissolved in a suitable solvent and metered separately or directly to the reactor using a sight/glass motor valve and orifice feeding arrangement at a point above the distributor plate. Also, the static electricity produced during the polymerization can be monitored, and the agent can be added intermittently in response to a rising level of static activity. Or, the agent can be added continuously. Preferably the agent is added intermittently in response to a change such as an increase in static electricity.

Most preferably, the agent is dissolved in an inert solvent and sprayed directly into the fluidized bed section of the reactor intermittently or continuously. This has the benefit of alleviating electrostatic charge most efficiently. The agent can also be fed to the recycle lines. The agent then migrates into the fluidized bed where it can still affect the static. Another method of adding the antistatic agent is by introduction with the supported or liquid catalyst stream. However, this method of addition should be employed for those catalysts which are not severely affected or poisoned by the antistatic agent.

All patents cited herein are hereby incorporated by reference.

The following examples further illustrate the invention. All parts and percentages are by weight unless otherwise specified.

### EXAMPLES

### Catalyst Preparation

### Example 1

A supported metallocene catalyst was prepared by supporting bis(n-butyl cyclopentadienyl) zirconium chloride and methyl alumoxane on Davison 955 silica. The catalyst formulation was such that there were 33 micromoles of zirconium for each gram of final catalyst and the Al:Zr ratio was approximately 180:1. The alumoxane used for the catalyst was supplied by the Ethyl Corporation as a solution in toluene.

### Example 2

Indene (available from Nippon Steel) and Zr(NEt2)4 (available from Boulder Scientific) were reacted in stoichiometric amounts to form IndZr(NEt₂)₃. Gaseous carbon dioxide was bubbled through a 0.05 Molar solution of IndZr(NEt2)3 for fifteen minutes while being cooled with an ice bath. The solution was then sparged for fifteen minutes with nitrogen to remove excess carbon dioxide.

### Fluidized-bed Polymerizations - (Pilot Scale)

For Examples 3 to 7, polymerizations were conducted in a pilot-scale fluidized-bed reactor. A typical pilot plant reactor consisted of two sections: a lower 14-inch diameter cylindrical section that contained the fluidized bed and extended approximately 10 feet in height; and an upper 24-inch diameter disengaging section approximately 10 feet high. Cycle gas that consisted mainly of monomer, comonomer(s) and inerts entered the reaction zone at the bottom of the reactor through a distributor plate. This cycle gas was circulated through the reactor at a rate between 8,000 and 13,000 lbs/hr by a gas compressor. The cycle gas passing upwardly through the bed absorbed the heat of reaction generated by the polymerization reaction. The portion of this gas which did not react in the bed became the recycle stream, which after exiting the compressor passed through a heat exchanger where it was cooled prior to returning to the polymerization zone. Flowrate of reactant and inert gas through the reactor system was adjusted by a ball valve on the recycle line to provide a superficial gas velocity in the polymerization zone of 1.3 to 2.0 ft/sec, preferably, 1.5 to 1.8 ft/sec. Resin was produced at a rate between 30 and 40 lbs/hr to provide a resin residence time of 3 to 4 hours.

Prior to each run the reactor was charged with 80 to 120 lbs of granular polyethylene and dried under high purity nitrogen. Aluminum alkyls, such as TEAL (triethyl aluminum), TIBA (triisobutyl aluminum), TMA (tri-methyl aluminum) or TNHAL (tri-n-hexyl aluminum) as set forth in Table 1, were added to the reactor to scavenge residual water. When these alkyls were not used, the alumoxane cocatalyst served the dual role of water scavenger and cocatalyst. The reactor was brought up to polymerization conditions by charging ethylene, hexene, and hydrogen, and by adjusting the temperature of the fluidized-bed.

Accumulation of electrostatic charge in the reactor was monitored with a static probe. The probe consisted of a 1/2-inch spherical electrode, which was inserted 1 to 4 inches in the fluidized bed at a location a few feet above the distributor plate. The conducting probe tip was insulated from the reactor walls. The output from the probe gave a measure of the potential between the tip of the probe and the ground. The range of electrostatic voltage measured in the pilot-scale reactors were either ±1500 V or ±3000 V, and that for the 8-foot commercial unit the electrostatic voltage range was ±8000 V.

In Examples 3, 4, 6, 10 and 11, the supported catalyst described in Example 1 was slurried at 20 wt % in mineral oil and fed to the reactor using a piston-type pump. The catalyst was conveyed into the reactor in a stream of isopentane and nitrogen through a 1/8-inch diameter stainless steel injection tube. The cocatalyst, TIBA or TNHAL, diluted in isopentane, was fed through a separate injection tube into the reactor with its isopentane solvent.

In Examples 5 and 7, the solution catalyst described in Example 2 was metered to the reactor using a piston pump. The alumoxane cocatalyst was pressurized under 500-psi nitrogen and was metered using a motor valve and orifice feeding arrangement. The catalyst and cocatalylst were precontacted in standard 1/8 or 1/4'' tubing tee and allowed to premix for several minutes. In Example 5, 0.6 lb/hr of isopentane was fed with the cocatalyst and MMAO solution, while in Example 7 no dilution with isopentane was carried out. Mixing times varied between a few minutes and an hour, depending on the activation requirements of the catalyst. The catalyst and cocatalyst solution was conveyed into the reactor through a 1/8-inch diameter injection tube with a stream of 5 to 10 lbs/hr of nitrogen. Alumoxane (supplied by Akzo-Nobel and is designated as MMAO type 3A) was diluted. This was mixed with an equal weight of purified isopentane to provide a 4.4 wt % Al solution, for convenience in handling.

Examples 3 to 5 demonstrate the typical occurrence of static activity in the reactor in the absence of an antistat agent. Reaction temperatures and molar gas ratios are presented in Table 1. The Al:Zr ratios listed for the supported catalyst include only the amount of aluminum fed to the reactor in the TNHAL or TIBA cocatalyst.

### Example 3 (Comparative)

The reactor was adjusted to the conditions shown in Table 1. A 10 wt% TIBA solution in isopentane was prefed to the reactor such that there was about 0.18 moles of TIBA in the bed. Metallocene catalyst as described in Example 1 was fed to the reactor at a rate of 4 grams/hr while maintaining a TIBA:Zr feed ratio at 300:1. The static level was oscillating between -50 to +50 V prior to the initiation of the metallocene catalyst feed. The static level began to oscillate wildly between -1200 V and +300 V within 15 minutes of establishing catalyst feed, and reached a constant -1500 V within 30 minutes. This high static level then required immediate corrective action to avoid severe wall fouling.

### Example 4 (Comparative)

After bringing the reactor to conditions, 0.013 mole of TNHAL were fed to the reactor in a 5 wt % solution in isopentane. The metallocene catalyst described in Example 1 was fed to the reactor at 1 g/hr while maintaining a TNHAL/Zr molar ratio of 330 Al:Zr. Prior to feeding the catalyst, the static level was essentially zero volts. Immediately after the catalyst feed was initiated, the static level in the bed began to increase and finally reached -1500 volts within 73 minutes.

### Example 5 (Comparative)

After the reactor reached polymerization conditions, the solution metallocene catalyst described in Example 2 was fed to the reactor with a stream of MMAO type 3A in isopentane at a 970 Al:Zr ratio. Only 4 hours after reaction was initiated, static charge in the reactor decreased from +60 V to -3000 V, resulting in rapid accumulation and fusion of polymer particles on the reactor walls.

Examples 6 and 7 describe the addition of a dilute solution of an antistatic agent (Atmer-163) in isopentane to control the buildup of static electricity in a fluidized-bed polymerization reactor. The antistatic agent solution was metered to the reactor using a motor valve-orifice feeding system. The antistatic agent solution was sprayed directly into the fluidized bed through a 1/8-inch tube.

### Example 6

After bringing the reactor up to conditions, the supported metallocene catalyst described in Example 1 was fed to the reactor. A TNHAL scavenger was fed directly to the reactor. The antistatic agent in this invention was used intermittently three different times to control the static level in the reactor. The static charge was observed to dissipate when the antistatic agent was fed to the reactor, and accumulate when the antistatic agent feed was stopped. In the first 8 hours of initiating metallocene catalyst feed and as the reaction rate was increased, the static charge in the reactor was observed to decrease from 0 to -50 V. A feed of 100 cc/hr of a 0.015 wt % antistatic agent solution was started to the reactor. Static potential continued downward for some time, eventually reaching -250 V. Antistatic agent feed was incrementally increased to 450 cc/hr, and static charge was reduced, being driven back to -20 V. Antistatic agent feedrate was reduced to 250 cc/hr, and static soon dropped to -100 V. Continued antistatic agent addition drove static to 0 V, and the antistatic agent feedrate was slowly decreased until it was shut off.

A few hours after the antistatic agent feed was stopped, the static activity increased and the level began to oscillate between -200 V and +100 V, and eventually reaching -600 V. As the antistatic agent flow was restarted at 150 cc/hr, and static returned to 0 V over 12 hours. Again, after the antistatic agent flow was shut off, after the third time, the static climbed to -300V, and again as the antistatic agent feed was re-established for a third time, the static level returned to 0 V.

### Example 7

After drying the initial charge (seed bed) of resin to 20 ppm water, a solution of 1000 cc of 5-wt % TEAL was fed to the reactor under a blanket of N₂. The static level remained at -1500 V, which is too high to allow polymerization. The static level remained at -1500 V following venting of the reactor and pressurizing with ethylene. A second charge of TEAL was fed to the reactor, and the reactor was purged two more times with high purity nitrogen. When the reactor was pressurized with nitrogen, static level remained at -1500 V. However, the static level dropped to -3000 V when the reactor was purged and repressurized with ethylene. The above-described procedure was ineffective at eliminating static charge from the reactor. As the feed of the antistatic solution (0.011% in isopentane) at a rate of 100 cc/hr was initiated to the reactor, the static level returned to 0 V within ten minutes and remained at this level following the feeding of a solution metallocene catalyst (described in Example 2) for the next 15 hours. The antistatic agent flow was terminated and within 50 minutes, the static level climbed to -1000 V, a range where sheeting can occur. The antistatic agent flow was restarted, and the static level was reduced to -2200 V, a significantly more operable condition. This procedure was repeated two hours later with similar results.

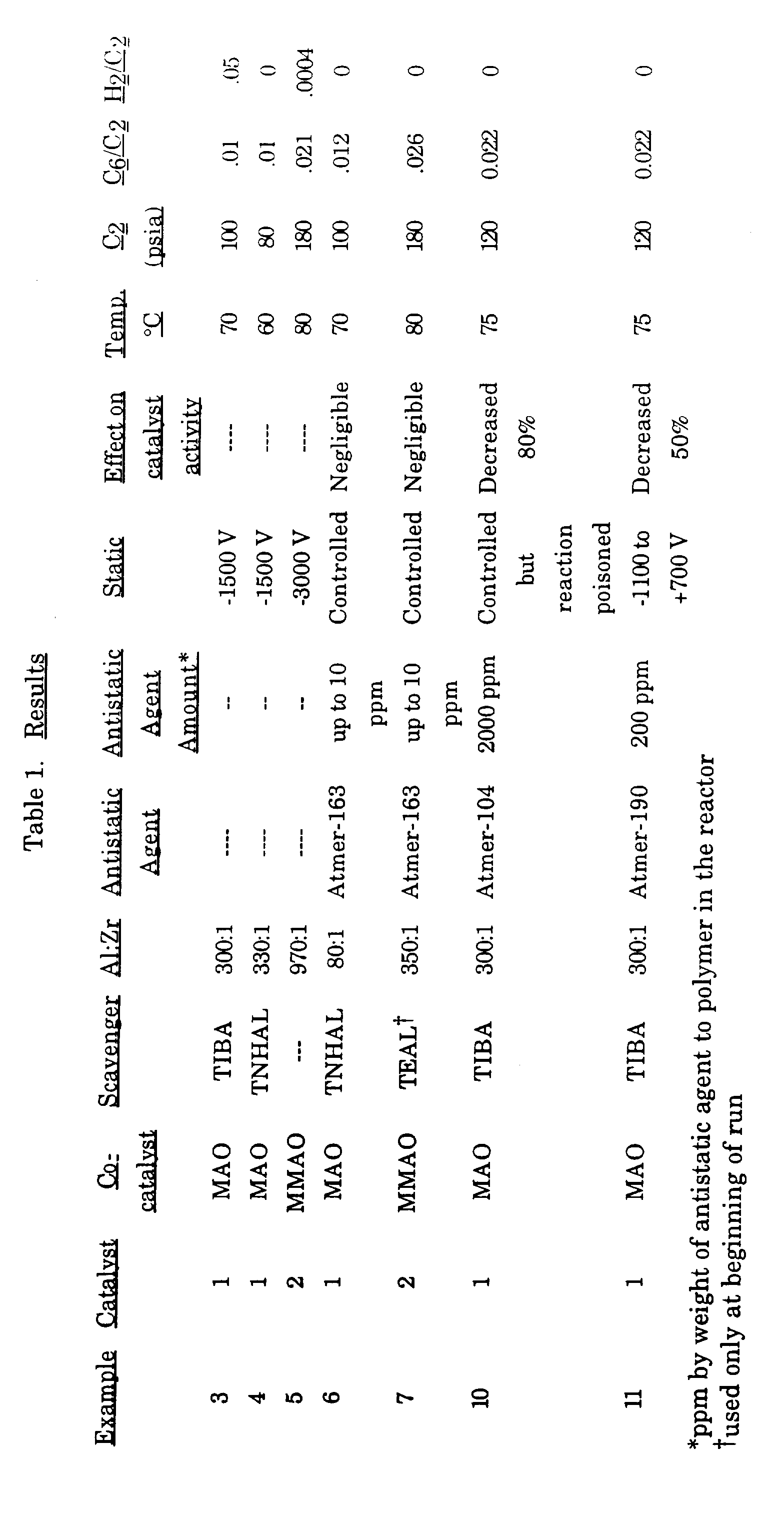

### Polymerizations in a Commercial Scale Reactor

In Examples 8 and 9 the indenyl zirconium tris-diethyl carbamate solution catalyst as described in Example 2 was used on a commercial scale reactor. The reactor was nominally 8 feet in diameter and was operated with a bed height of 38 to 42 feet, and a superficial gas velocity of approximately 2 ft/sec. The reactor contained approximately 30,000 lbs of granular polyethylene resin.

The catalyst was mixed with MMAO 3A as received at 7.38 wt % Al. Additional dilution was performed by adding isopentane to the mixture. This liquid mixture was introduced to the reactor through a 1/4-inch OD stainless-steel injection tube.

The injection tube was located within a shroud pipe, which extended 23 inches into the reactor at a height of 6 inches above the distributor plate. The injection tube was centered in the shroud tube with tapered fins. The tip of the injection tube extended 2 inches into the reactor beyond the end of the shroud tube. The end of the injection tube was tapered, to avoid accumulation of catalyst solution. The shroud tube was also tapered over the last 6 inches. A stream of ethylene was fed through the annular space between the shroud tube and the catalyst injection tube to assist in the catalyst spraying.

### Example 8

The reactor was operated at 80 °C and a total pressure of 270 psig. The ethylene partial pressure set point was 170 to 180 psia, and the hexene to ethylene gas-phase molar ratio was 0.025 to 0.035.

The static level climbed from 0 V to -2000 V before the metallocene catalyst was fed to the reactor. As the MMAO cocatalyst feed was initiated, the static level increased rapidly to -4200 V. Decreasing the MMAO feedrate did not reduce static level, which continued to increase to -4400 V. At that time, the feed of the antistatic solution of 8 wt % Atmer-163 in isopentane was initiated to the recycle line on the suction side of the compressor at a rate of 7 lbs/hr. Within 30 minutes the static returned to 0 V. Catalyst was then fed with the MMAO cocatalyst. The feedrate of the anitstatic solution was decreased to 2 lbs/hr. Production rate was brought to the full rate and the static remained stable for 12 hours.

After 12 hours, changes in the process caused the static to drift upward, eventually reaching + 8000 V. After 2 hours of 8000 V of positive static, antistatic agent flow was increased to 50 lbs/hr. In just 4 minutes, the static dropped to an acceptable range of +200 V.

### Example 9

A seed bed was charged to the reactor and dried to 50 ppm water. The reactor was pressurized to 100 psig of nitrogen and 80 lbs/hr of 10% TEAL in isopentane was fed to the reactor over two hours and allowed to circulate for 1 hour. Ethylene and hexene levels were established in the reactor, and the temperature was adjusted at the values set forth in Example 8.

Metallocene catalyst feed was initiated and about 1 hour later the static level increased from 0 V to + 1600 V. At that time, a flow of 2 lbs/hr antistatic agent solution was fed to the reactor over a period of an hour. The static level was observed to decrease to 0 V. Stopping the antistatic agent (Atmer 163) flow resulted in the static level increasing to 1600 V. A 1 lb/hr stream of antistatic agent was restarted and static returned to 0 V within 4 hours.

On a subsequent run, the antistatic agent was also found to eliminate static when fed directly to the bed eight feet above the distributor plate over a 4 hour period.

### Example 10 (Comparative)

A side-mounted stirred reactor as described in U.S. Patent No. 5,317,035 (Figure 2) was employed. The catalyst described in Example 1 was fed to the reactor with TIBA scavenger for an hour resulting in a production rate of approximately 8 lbs/hr. During startup, severe negative static was encountered. An ester fatty acid of sorbitan tristearate available from ICI as Atmer® 104 was fed to the reactor after the -catalyst feed had been discontinued. It required 200 ppm to eliminate the static (20 times more than was needed in Examples 6 and 7). The ester fatty acid reduced the catalyst activity to 50% of the previous value. In contrast, the poisoning effect of the antistatic agent of the present invention was too low or insignificant to observe any noticeable change in catalyst activity.

Once the static was neutralized, the catalyst and scavenger flow were reinstated, and the static immediately decreased. At this point, an excessive amount of the ester fatty acid was fed to the reactor and static control was poor even after 2,000 ppm had been added and activity was reduced significantly.

### Example 11 (Comparative)

The reactor employed in Example 10 was restarted with the catalyst described in Example 1 with TIBA scavenger. Static again dropped to -600 V, and a quaternary ammonium compound available as Atmer® 190 from ICI was fed to the reactor at 20 ppm, reducing the catalyst activity by 50%. Catalyst and TIBA feeds were reinstated, and static dropped to -1100 V. A total of 100 ppm of the quaternary ammonium antistat was fed (10 times more than was needed using the antistatic agent of the present invention). The static did not respond immediately. It only slowly increased up to 0 V, and then proceeded upward to 700 V.

These comparative Examples 10 and 11 illustrate that the antistatic agent of the present invention is unique in that (1) it controls static without poisoning the catalyst, (2) it drives both positive and negative static to zero, and (3) it can be used in smaller amounts than other antistatic compositions.

## Claims

1. A process for making a polyethylene homopolymer, copolymer, or terpolymer comprising providing ethylene and optionally at least one alpha olefin having 3 to 18 carbon atoms and optionally a diene in a reaction zone containing a metallocene polymerization catalyst composition under polymerization conditions in the presence of an antistatic agent represented by the formula: 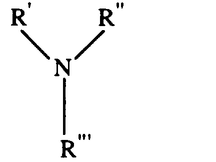 wherein R' is an alkyl having 2 to 22 carbon atoms; R'' is a hydroxyalkyl having 2 to 22 carbon atoms; and R''' is selected from the group consisting of R' and R''.

2. A process for producing a homopolymer, copolymer, or terpolymer of polyethylene, which process comprises contacting ethylene and optionally at least one C₃ to C₁₈ alpha olefin in a reaction zone under polymerization conditions in the presence of a catalyst composition comprising
(i) a catalyst precursor selected from the group consisting of 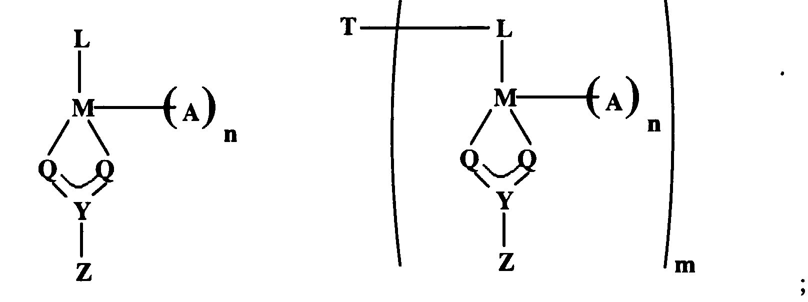 and
mixtures thereof
wherein:
M is Zr or Hf;
L is a substituted or unsubstituted, π-bonded ligand;
each Q can be the same or different and is independently selected from the group consisting of -O-, -NR³-, -CR³₂- and -S-;
Y is either C or S;
Z is selected from the group consisting of -OR³, -NR³₂, CR³₃, -SR³, -SiR³₃, -PR³₂ and -H, with the proviso that when Q is-NR³- then Z is selected from the group consisting of -OR³, -NR³₂,-SR³, -SiR³₃, -PR³₂ and -H;
n is 1 or 2;
A is a univalent anionic group when n is 2 or A is a divalent anionic group when n is 1;
R³ can be the same or different and is independently a group containing carbon, silicon, nitrogen, oxygen, and/or phosphorus and one or more R³ groups may optionally be attached to the L substituent;
T is a bridging group selected from the group consisting of an alkylene or arylene group containing from 1 to 10 carbon atoms, germanium, silicone and alkyl phosphine; and m is 1 to 7; and
(ii) a co-catalyst;
and introducing an antistatic agent represented by the formula: 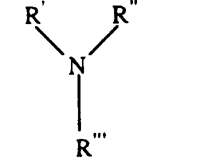 wherein R' is an alkyl having 2 to 22 carbon atoms; R'' is a hydroxyalkyl having 2 to 22 carbon atoms; and R''' is selected from the group consisting of R' and R''; and wherein the co-catalyst selected from the group consisting of (a) branched or cyclic oligomeric poly(hydro-carbylaluminum oxide) that contain repeating units of the general formula -(Al(R)O)-, where R is an alkyl radical containing from 1 to 12 carbon atoms, or an aryl radical such as a substituted or unsubstituted phenyl or naphthyl group and (b) borates.

3. The process of Claim 2 wherein Q is oxygen, Y is carbon, Z is selected from the group consisting of -OR³, -CR³₃ and -NR³₂, R³ is a hydrocarbon group having 1 to 20 carbon atoms, L is a substituted cyclopentadienyl ligand.

4. The process of Claim 3 wherein L is an indenyl group, T is an ethylene group or a silicone group; m is 2 or 3.

5. The process of any one of the preceding Claims wherein in the antistatic agent, R' contains 10 to 22 carbon atoms, and R'' and R''' each contain 2 to 4 carbon atoms.

6. The process of any one of the preceding Claims wherein the antistatic agent is selected from the group consisting of N,N-bis-(2-hydroxyethyl) alkylamine, N-(2-hydroxyethyl) dialkylamine, N,N-bis-(2-hydroxypropyl) alkylamine, N,N-bis-(2-hydroxybutyl) alkylamine and like compounds.

7. The process of any one of the preceding Claims wherein the antistatic agent is in a solvent comprising 50 to 98% based on the weight of the antistatic agent.

8. The process of any one of the preceding Claims wherein the antistatic agent is employed in an amount ranging from 0.0001 to 0.02 weight percent of the total monomer feed.

9. The process of any one of the preceding Claims wherein the process is conducted in the gas phase and the catalyst is sprayed dried or in liquid form and the antistatic agent is introduced intermittently.

10. The process of any one of the preceding Claims wherein the alpha olefin is selected from the group consisting of propylene, 1-butene, 1-pentene, 1-hexene, 4-methyl-1-pentene, and 1-octene; and optionally there is additionally present (i) a diene selected from the group consisting of 5-ethylidene-2-norbornene, 1,3-cyclopentadiene, 1,7-octadiene, 1,4-hexadiene, and mixtures thereof; and (ii) an inert particulate material selected from the group consisting of carbon black, silica, clay, talc, and mixtures thereof.
